# EUROPÄISCHE PATENTSCHRIFT

(11) **EP 3 106 961 B1**
(45) Veröffentlichungstag und Bekanntmachung des Hinweises auf die Patenterteilung: **07.10.2020**
(21) Anmeldenummer: 16001219.1
(22) Anmeldetag: 31.05.2016
(51) Int. Cl.: G05G 1/44, G05G 5/03, B60W 50/16, B60K 26/02

(54) **AKTIVES FAHRPEDAL FÜR EIN FAHRZEUG**
ACTIVE ACCELERATOR PEDAL FOR A VEHICLE
PÉDALE ACTIVE POUR UN VÉHICULE

(30) Priorität: 16.06.2015 DE 102015007584
(43) Veröffentlichungstag der Anmeldung: 21.12.2016
(73) Patentinhaber: AUDI AG, 85045 Ingolstadt (DE)
(72) Erfinder: Lepczyk, Daniel, 86529 Schrobenhausen (DE); Oberthür, Jan, 85055 Ingolstadt (DE)
(74) Vertreter: Reichert, Thomas Klaus

(56) Entgegenhaltungen:
- DE-A1-102004 026 407
- DE-A1-102004 026 409
- DE-A1-102007 011 739
- DE-A1-102010 018 753

## Beschreibung

Die Erfindung betrifft ein Fahrzeug nach dem Oberbegriff des Patentanspruches, ein aktives Fahrpedal für ein solches Fahrzeug nach dem Oberbegriff des Patentanspruches 9 sowie ein Verfahren zum Ansteuern eines solchen aktiven Fahrpedals nach dem Anspruch 10.

In modernen Kraftfahrzeugen kann über ein aktives Fahrpedal eine haptische Rückmeldung von aktuellen Fahrbetriebs-Parametern an den Fahrer erfolgen. Hierzu kann das aktive Fahrpedal einen Aktuator aufweisen, der dem Fahrpedal gezielt eine zusätzliche Gegenkraft aufprägt. Beispielhaft kann der Aktuator ab einer bestimmten Fahrpedallage einen variabel einstellbaren Druckpunkt erzeugen, mit dem ein weiteres Niederdrücken des Fahrpedals erschwert ist, jedoch vom Fahrer überdrückbar ist.

Die gattungsbildende DE 10 2012 209 647 A1 offenbart ein Fahrzeug mit einem Antriebsaggregat, über das ein Antriebsmoment auf die Fahrzeugräder abtreibbar ist, und mit einer Steuereinrichtung, die auf ein durch Gaspedal-Betätigung fahrerseitig vorgebbares Sollmoment das Antriebsaggregat ansteuert, wobei das Gaspedal ein über einen Stellweg verstellbares aktives Fahrpedal ist, das unter Bildung eines Druckpunktes mit einem, von einem Steuergerät ansteuerbaren Aktuator mit einer zusätzlichen Gegenkraft beaufschlagbar ist, die in einem lokal begrenzten Pedalwegintervall bis auf eine fahrerseitig überdrückbare Maximalkraft ansteigt und wobei das Steuergerät eine Auswerteeinheit aufweist.

Die DE 10 2011 050 056 A1 beschreibt ein Fahrpedal, bei dem bei besonderen Fahrsituationen haptische Signale gegeben werden können, wofür ein elektrischer Antrieb vorgesehen ist. Damit einem Fahrer mit einfachen Mitteln haptische Signale bei beliebiger Position einer Bedienplatte und ohne zeitliche Verzögerung gegeben werden können, ist der Antrieb durch eine Scheibe unmittelbar mit einem Zugelement gekoppelt, das zugkraftschlüssig mit einem Rotor verbunden ist, und der Rotor wirkt durch eine auf das Zugelement ausgeübte zweite Kraft gegen eine auf die Bedienplatte ausgeübte erste Kraft.

Aus der DE 10 2012 217 677 A1 ist ein gattungsgemäßes Fahrzeug bekannt, bei dem das Gaspedal ein aktives Fahrpedal ist, das unter Bildung eines solchen Druckpunktes mit einem, von einem Steuergerät ansteuerbaren Aktuator mit einer zusätzlichen Gegenkraft beaufschlagbar ist. Die Gegenkraft steigt in einem lokal begrenzten Pedalwinkelintervall bis auf eine vom Fahrer überdrückbare Maximalkraft an.

In der DE 10 2012 217 677 A1 weist das Fahrzeug einen Hybridantrieb mit einer Brennkraftmaschine und einer Elektromaschine auf. In einem ersten Betriebsmodus erfolgt ein reiner elektromotorischer Antrieb und in einem zweiten Betriebsmodus wird die Brennkraftmaschine zugeschaltet oder wird vollständig auf diese umgeschaltet. Durch die Bereitstellung des Druckpunktes innerhalb des Pedal-Stellweges erhält der Fahrer eine Rückmeldung darüber, dass mit dem Überdrücken des Druckpunktes ein Wechsel vom rein elektromotorischen Antrieb auf einen zumindest teilweisen verbrennungsmotorischen Antrieb erfolgt.

Während des Fahrbetriebs kann somit der Fahrer den Druckpunkt bewusst ansteuern, jedoch nicht übertreten, um einen rein elektromotorischen Antrieb des Fahrzeugs sicherzustellen. Das heißt, dass bei einer solchen Druckpunkt-Ansteuerung der Aktuator ständig eine Gegenkraft erzeugen muß, und zwar so lange, wie der Fahrer das Fahrpedal unmittelbar vor dem Druckpunkt hält. Dies ist mit einer hohen elektrischen Leistungsaufnahme des Aktuators verbunden.

Die Aufgabe der Erfindung besteht darin, ein Fahrzeug sowie ein aktives Fahrpedal für ein solches Fahrzeug und ein Verfahren zum Ansteuern des aktiven Fahrpedals bereitzustellen, bei dem die elektrische Leistungsaufnahme des aktiven Fahrpedals während des Fahrbetriebs in einfacher Weise reduzierbar ist.

Die Aufgabe ist durch die Merkmale des Patentanspruches 1, 9 oder 10 gelöst. Bevorzugte Weiterbildungen der Erfindung sind in den Unteransprüchen offenbart.

Die Erfindung beruht auf dem Sachverhalt, dass im Stand der Technik bei einer vom Fahrer gewählten Pedalposition innerhalb des oben definierten Pedalwegintervalls (das heißt bei einer Druckpunkt-Ansteuerung) der Fahrpedal-Aktuator ständig eine Gegenkraft zur Bereitstellung des Druckpunktes erzeugt, obwohl der Fahrer kein Überdrücken des Druckpunktes beabsichtigt. Vor diesem Hintergrund weist das Steuergerät eine Auswerteeinheit auf. Diese erzeugt ab einer vorgegebenen Grenz-Verweildauer des fahrerseitig betätigten Fahrpedals im Pedalwegintervall ein Deaktivierungssignal, mit dem die vom Aktuator erzeugte Gegenkraft zumindest reduzierbar ist.

Das heißt, dass erfindungsgemäß bei Erreichen (nicht bei Übertreten) des Druckpunktes nach einer kurzen Zeit die Gegenkraft zurückgenommen wird. Von dieser Kraftreduzierung bemerkt der Fahrer, der den Fahrbetrieb in der angesteuerten Pedalposition beabsichtigt, in der Regel nichts. Durch die Rücknahme der Gegenkraft kann eine im Stand der Technik erforderliche hohe elektrische Leistungsaufnahme des Aktuators vermieden werden. Im Stand der Technik würde dagegen die Gegenkraft so lange bestehen bleiben, bis der Fahrer den Druckpunkt übertritt oder das Pedal löst, wodurch es aus dem Druckpunkt-Pedalwegintervall herausverlagert wird. Diese hohe elektrische Leistungsaufnahme kann mit dem erfindungsgemäßen intelligenten Ansteuersystem verhindert werden.

In einer technischen Ausführung der Ansteuerstrategie kann die Auswerteeinheit eine Ist-Verweildauer des fahrerseitig betätigten Fahrpedals in seiner, im Pedalwegintervall befindlichen Pedalwegposition erfassen. Die Auswerteeinheit kann zudem einen Vergleicher-Baustein aufweisen, mit dem die erfasste Ist-Verweildauer mit der im Steuergerät hinterlegten Grenz-Verweildauer verglichen wird. Überschreitet die Ist-Verweildauer die Grenz-Verweildauer, so kann die Auswerteinheit das oben erwähnte Deaktivierungssignal erzeugen, mit dem die vom Aktuator erzeugte Gegenkraft reduzierbar ist. Besonders bevorzugt ist es im Hinblick auf eine Reduzierung der elektrischen Leistungsaufnahme, wenn bei Vorliegen des Deaktivierurigssignales der Aktuator vollständig deaktiviert wird.

Der Erfindung liegt der Gedanke zugrunde, dass ab der vorgegebenen Grenz-Verweildauer des Fahrpedals in seiner im Pedalwegintervall befindlichen Pedalposition davon auszugehen ist, dass diese Pedalposition ohne ein Überdrücken des Druckpunktes beibehalten wird. Entsprechend kann der Aktuator deaktiviert werden. Die Grenz-Verweildauer liegt bevorzugt in einem Bereich von wenigen Sekunden und kann empirisch festgelegt sein. Die Erfindung nutzt dabei die Erkenntnis, dass die Fußstellung des Fahrers nach einigen Sekunden - selbst bei der Deaktivierung des Aktuators - meist unverändert verbleibt. Das heißt dass bei der Deaktivierung des Aktuators nach wie vor ein Fahrbetrieb in der vom Fahrer vorgewählten Pedalposition gewährleistet ist.

Im weiteren Fahrbetrieb kann der Fahrer das Fahrpedal erneut mit positivem Gradienten betätigen, das heißt weiter eindrücken. In diesem Fall kann die Fahrpedal-Ansteuerung so ausgelegt sein, dass der Aktuator erneut aktiviert wird, um die Gegenkraft wieder schlagartig aufzuschalten. Auf diese Weise kann ein unbeabsichtigtes Übertreten des Druckpunktes vermieden werden.

Mit der Bereitstellung des vom aktiven Fahrpedal erzeugten Druckpunktes erfolgt in an sich bekannter Weise eine haptische Rückmeldung von aktuellen Fahrbetriebsparametern an den Fahrer. Die Erfindung ist besonders bevorzugt bei einem Hybridfahrzeug anwendbar, dessen Antriebsaggregat eine Brennkraftmaschine und zumindest eine Elektromaschine aufweist. Ein solches Hybridfahrzeug kann in einem Betriebsmodus im unteren Geschwindigkeitsbereich rein elektromotorisch angetrieben werden. In einem zweiten Betriebsmodus kann das Fahrzeug mit zugeschalteter Brennkraftmaschine angetrieben oder alternativ vollständig auf die Brennkraftmaschine umgeschaltet werden unter Abschaltung der Elektromaschine. Mit der energiesparenden erfindungsgemäßen Ansteuerstrategie kann zunächst das Fahrpedal bis zum Erreichen des Druckpunktes durchgedrückt werden, jedoch ohne den Druckpunkt zu überdrücken. Auf diese Weise kann der dem reinen elektromotorischen Antrieb zugeordnete Pedal-Stellweg voll ausgenutzt werden, ohne dass es zu einer Zuschaltung oder Umschaltung auf die Brennkraftmaschine kommt.

Die Erfindung und ihre vorteilhaften Aus- und Weiterbildungen sowie deren Vorteile werden nachfolgend anhand von Zeichnungen näher erläutert.

Es zeigen:
- Fig. 1: in einem grob schematischen Blockschaltdiagramm einen Antriebsstrang eines Kraftfahrzeuges mit einer zugeordneten Steuerung des aktiven Fahrpedals;
- Fig. 2: eine Fahrpedal-Kennlinie; und
- Fig. 3 und 4: jeweils Ansichten entsprechend der Fig. 2, in denen die erfindungsgemäße Ansteuerstrategie zur Steuerung des Fahrpedal-Aktuators veranschaulicht ist.

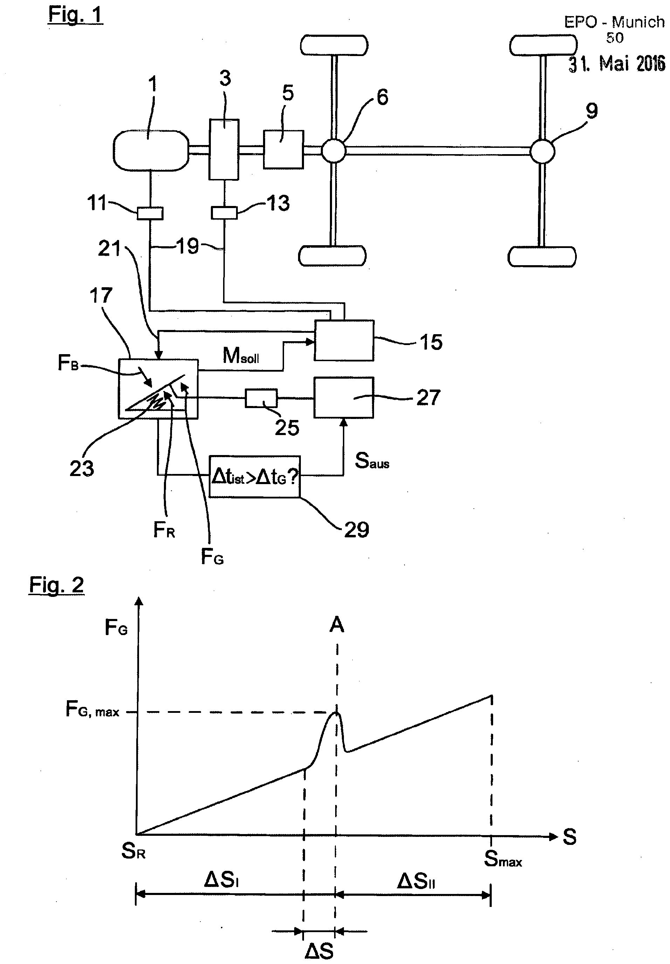

Die Fig. 1 ist im Hinblick auf ein einfaches Verständnis der Erfindung angefertigt. Von daher ist die Fig. 1 eine lediglich grob vereinfachte Darstellung, die keinen realitätsgetreuen Aufbau des Fahrzeugs sowie der Steuerung des Antriebsaggregates wiedergibt. In der Fig. 1 weist das Antriebsaggregat des Fahrzeugs eine Brennkraftmaschine 1 sowie eine im Antriebsstrang in Reihe geschaltete Elektromaschine 3 auf, die im weiteren Verlauf des Antriebsstranges mit einem Getriebe 5 trieblich gekoppelt ist. Das Getriebe 5 treibt auf ein frontseitiges Achsdifferenzial 6 ab, das in trieblicher Verbindung mit einem Hinterachsdifferenzial 9 ist. Die Brennkraftmaschine 1 und die Elektromaschine 3 sind über ein Motorsteuergerät 11 sowie eine Leistungselektronik 13 mittels einer elektronischen Steuereinrichtung 15 ansteuerbar, die als Eingangsgrößen eine Vielzahl von Fahrbetriebsparametern erfasst. Zudem ist die Steuereinrichtung 15 mit einem aktiven Fahrpedal 17 signaltechnisch verbunden. In Abhängigkeit von dem Auslenkwinkel (das heißt dem Stellweg s) des Fahrpedals 17 wird der Steuereinrichtung 15 eine, einem Soll-Antriebsmoment Mₛₒₗₗ entsprechende Fahrer-Vorgabe zugeführt. Auf der Grundlage der Sollmoment-Vorgabe steuert die Steuereinrichtung 15 über Signalleitungen 19 das Motorsteuergerät 9 und/oder die Leistungselektronik 13 an.

Das Gaspedal 17 ist vorliegend ein aktives Fahrpedal bzw. ein sogenanntes Force-Feedback-Pedal, dessen Gaspedal-Kennlinie (Fig. 2) in Abhängigkeit von Steuersignalen der Steuereinrichtung 15 variierbar ist. Hierzu ist die Steuereinrichtung 15 über die Signalleitung 21 mit dem Fahrpedal 17 in Verbindung.

In der Fig. 1 ist das Fahrpedal 17 zwischen einer Ruheposition s_{R} und einer durchgedrückten Position sₘₐₓ (Fig. 2 bis 4) verstellbar. Das Fahrpedal 17 ist dabei mittels eines Rückstell-Federelementes 23 mit einer Rückstellkraft F_{R} in Richtung auf seine Ruheposition s_{R} beaufschlagt. Dem aktiven Fahrpedal 17 kann von einem Aktuator 25 eine zusätzliche Gegenkraft F_{G} aufgeprägt werden, und zwar unter Bildung eines Druckpunktes A (Fig. 2 bis 4) in der Fahrpedal-Kennlinie. Zur Erzeugung des Druckpunktes A steigt in der Fig. 2 die Gegenkraft F_{G} in einem lokal begrenzten Pedalwegintervall Δs bis auf eine Maximalkraft Fₘₐₓ an, die vom Fahrer-Fuß überdrückbar ist.
Im vorliegenden Ausführungsbeispiel ist das Fahrpedal 17 rein exemplarisch in einem Hybridfahrzeug eingebunden, das exemplarisch in einem ersten Betriebsmodus I rein elektrisch betreibbar ist, und in einem zweiten Betriebsmoduls II rein verbrennungsmotorisch betreibbar ist. Der Druckpunkt A stellt für den Fahrer eine haptische Rückmeldung bereit, dass bei dessen Überdrücken das Hybridfahrzeug von dem ersten Betriebsmodus I in den zweiten Betriebsmodus wechselt. Der Druckpunkt A ist in Abhängigkeit von diversen Fahrbetriebsparametern, zum Beispiel dem Ladezustand der hier nicht dargestellten Traktionsbatterie, entlang der Pedal-Kennlinie zwischen der Pedal-Ruheposition s₀ und der durchgedrückten Pedal-Position sₘₐₓ verlagerbar.

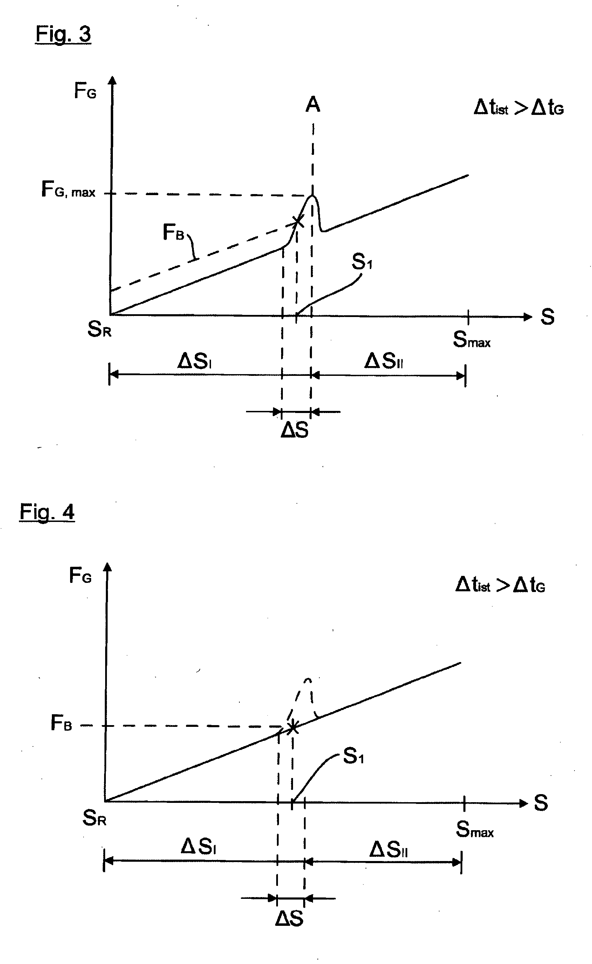

Der Fahrpedal-Aktuator ist von einem Fahrpedal-Steuergerät 27 aktivierbar/deaktivierbar, dem eine Auswerteeinheit 29 zugeordnet ist. Mit der Auswerteeinheit 29 wird im Fahrbetrieb eine Ist-Verweildauer Δtᵢₛₜ, in der der Fahrer das Fahrpedals 17 in einer Pedalposition s₁ innerhalb des Pedalwegintervalls Δs hält (Fig. 3).

Mit der Auswerteeinheit 29 sowie dem Steuergerät 27 kann der Fahrpedal-Aktuator 25 mit einer Ansteuerstrategie energiesparend betrieben werden, die insbesondere in der folgenden Fahrsituation anwendbar ist: So kann der Fahrer beabsichtigen, das Fahrzeug im rein elektromotorischen Antrieb zu betreiben. Hierzu kann der Fahrer mit seinem Fuß den Fahrpedal-Druckpunkt A zum Beispiel lagegeregelt oder kraftgeregelt ansteuern, jedoch diesen nicht übertreten. Dies ist in der Fig. 3 gezeigt, wonach sich (exemplarisch durch eine kraftgeregelte Ansteuerung) eine vom Fahrer ausgewählte Ist-Pedalposition s₁ einstellt, in der die Fuß-Betätigungskraft F_{B} des Fahrers sowie die Pedal-Rückstellkraft F_{R} und die Pedal-Gegenkraft F_{G} im Kräftegleichgewicht sind.

Die in der Fig. 3 und 4 mit einem Kreuz angedeutete Ist-Pedalposition s₁ befindet sich unmittelbar am Druckpunkt A, und zwar innerhalb des oben definierten Pedalwegintervalls Δs, der dem Druckpunkt A vorgelagert ist. Mittels der Auswerteeinheit 29 wird die Ist-Verweildauer Δtᵢₛₜ des Fahrpedals 17 in seiner Pedalposition s₁ im Pedalwegintervall Δs erfasst. Die Auswerteeinheit 29 vergleicht die erfasste Ist-Verweildauer Δtᵢₛₜ mit einer in der Auswerteinheit 29 hinterlegten Grenz-Verweildauer Δt_{G}. Überschreitet ist die Ist-Verweildauer Δtᵢₛₜ die Grenz-Verweildauer Δt_{G}, so erkennt die Auswerteeinheit 29, dass der Fahrer beabsichtigt, die Pedalposition s₁ im Pedalwegintervall Δs beizubehalten, und zwar ohne ein Überdrücken des Druckpunktes A.

Folgerichtig erzeugt die Auswerteeinheit 29 ein Deaktivierungssignal Sₐᵤₛ. Bei Vorliegen des Deaktivierungssignals Sₐᵤₛ deaktiviert das Steuergerät 27 den Aktuator 25, wodurch die den Druckpunkt A bildende Gegenkraft F_{G} wegfällt, wie es in dem Diagramm der Fig. 4 angedeutet ist.

## Patentansprüche

1. Fahrzeug mit einem Antriebsaggregat (1, 3), über das ein Antriebsmoment auf die Fahrzeugräder abtreibbar ist, und mit einer Steuereinrichtung (15), die auf ein durch Gaspedal-Betätigung fahrerseitig vorgebbares Sollmoment (Mₛₒₗₗ) das Antriebsaggregat (1, 3) ansteuert, wobei das Gaspedal (17) ein über einen Stellweg (s) verstellbares aktives Fahrpedal (17) ist, das unter Bildung eines Druckpunktes (A) mit einem, von einem Steuergerät (27) ansteuerbaren Aktuator (25) mit einer zusätzlichen Gegenkraft (F_{G}) beaufschlagbar ist, die in einem lokal begrenzten Pedalwegintervall (Δs) bis auf eine fahrerseitig überdrückbare Maximalkraft (Fₘₐₓ) ansteigt, wobei das Steuergerät (27) eine Auswerteeinheit (29) aufweist, **dadurch gekennzeichnet, dass** die Auswerteeinheit (29) ab einer vorgegebenen Grenz-Verweildauer (Δt_{G}) des fahrerseitig betätigten Fahrpedals (17) innerhalb des Pedalwegintervalls (Δs) ein Deaktivierungssignal (Sₐᵤₛ) erzeugt, mit dem die vom Aktuator (25) erzeugte Gegenkraft (F_{G}) reduzierbar ist.

2. Fahrzeug nach Anspruch 1, **dadurch gekennzeichnet, dass** die Auswerteeinheit (29) eine Ist-Verweildauer (Δtᵢₛₜ) des fahrerseitig betätigten Fahrpedals (17) in seiner Pedalposition (s₁) innerhalb des Pedalwegintervalls (Δs) erfasst, und dass die Auswerteeinheit (29) die erfasste Ist-Verweildauer (Δtᵢₛₜ) mit der Grenz-Verweildauer (Δt_{G}) vergleicht, und dass bei einem Überschreiten der Grenz-Verweildauer (Δt_{G}) die Gegenkraft (F_{G}) reduzierbar ist.

3. Fahrzeug nach Anspruch 1 oder 2, **dadurch gekennzeichnet, dass** bei Vorliegen des Deaktivierungssignals (Sₐᵤₛ) der Aktuator (25) deaktiviert ist.

4. Fahrzeug nach Anspruch 1, 2 oder 3, **dadurch gekennzeichnet, dass** ab der vorgegebenen Grenz-Verweildauer (Δt_{G}) die Auswerteeinheit (29) erkennt, dass die Pedalposition (s₁) innerhalb des Pedalwegintervalls (Δs) ohne ein Überdrücken des Druckpunkts (A) beizubehalten ist und den Aktuator (25) deaktiviert.

5. Fahrzeug nach einem der vorhergehenden Ansprüche, **dadurch gekennzeichnet, dass** durch die Bereitstellung des Druckpunkts (A) eine haptische Rückmeldung über den Fahrbetrieb erfolgt.

6. Fahrzeug nach Anspruch 5, **dadurch gekennzeichnet, dass** das Antriebsaggregat (1, 3) in einem ersten Betriebsmodus (I) und in einem zweiten Betriebsmodus (II) betreibbar ist, und dass dem Fahrer mit dem Überdrücken des Druckpunkts (A) ein Wechsel vom ersten Betriebsmodus (I) in den zweiten Betriebsmodus (II) signalisierbar ist.

7. Fahrzeug nach Anspruch 6, **dadurch gekennzeichnet, dass** das Antriebsaggregat eine Brennkraftmaschine (1) und zumindest eine Elektromaschine (3) aufweist, und dass im ersten Betriebsmodus (I) ein reiner elektromotorischer Antrieb erfolgt, und im zweiten Betriebsmodus (II) die Brennkraftmaschine (1) zugeschaltet ist oder auf die Brennkraftmaschine (1) umgeschaltet ist.

8. Fahrzeug nach einem der vorhergehenden Ansprüche, **dadurch gekennzeichnet, dass** für den Fall, dass der Fahrer im weiteren Fahrbetrieb das Fahrpedal erneut mit positivem Gradienten betätigt, der Aktuator erneut aktiviert wird, um die Gegenkraft (F_{G}) wieder schlagartig aufzuschalten.

9. Aktives Fahrpedal für ein Fahrzeug nach einem der vorhergehenden Ansprüche, bei dem eine Steuereinrichtung (15) auf ein durch eine Gaspedal-Betätigung fahrerseitig vorgebbares Sollmoment (Mₛₒₗₗ) das Antriebsaggregat (1, 3) ansteuert, wobei das Gaspedal (17) ein über einen Stellweg (s) verstellbares aktives Fahrpedal ist, das unter Bildung eines Druckpunktes (A) mit einem, von einem Steuergerät (27) ansteuerbaren Aktuator (25) mit einer zusätzlichen Gegenkraft (F_{G}) beaufschlagbar ist, die in einem lokal begrenzten Pedalwegintervall (Δs) bis auf eine fahrerseitig überdrückbare Maximalkraft (Fₘₐₓ) ansteigt, wobei das Steuergerät (27) eine Auswerteeinheit (29) aufweist, **dadurch gekennzeichnet, dass** die Auswerteeinheit (29) ab einer vorgegebenen Grenz-Verweildauer (Δt_{G}) des fahrerseitig betätigten Fahrpedals (17) innerhalb des Pedalwegintervalls (Δs) ein Deaktivierungssignal (Sₐᵤₛ) erzeugt, mit dem die vom Aktuator (25) erzeugte Gegenkraft (F_{G}) reduzierbar ist.

10. Verfahren zum Steuern eines aktiven Fahrpedals, bei dem eine Steuereinrichtung (15) auf ein durch eine Gaspedal-Betätigung fahrerseitig vorgebbares Sollmoment (Msoll) das Antriebsaggregat (1, 3) ansteuert, wobei das Gaspedal (17) ein über einen Stellweg (s) verstellbares aktives Fahrpedal ist, das unter Bildung eines Druckpunktes (A) mit einem, von einem Steuergerät (27) ansteuerbaren Aktuator (25) mit einer zusätzlichen Gegenkraft (FG) beaufschlagt wird, die in einem lokal begrenzten Pedalwegintervall (As) bis auf eine fahrerseitig überdrückbare Maximalkraft (Fmax) ansteigt, und ab einer vorgegebenen Grenz-Verweildauer (AtG) des fahrerseitig betätigten Fahrpedals (17) innerhalb des Pedalwegintervalls (As) ein Deaktivierungssignal (Saus) erzeugt wird, mit dem die vom Aktuator (25) erzeugte Gegenkraft (FG) reduziert wird.

## Claims

1. Vehicle having a drive unit (1,3), by means of which a drive torque can be output to the vehicle wheels, and having a control apparatus (15), which actuates the drive unit (1,3) at a setpoint torque (Mₛₒₗₗ) that can be specified by the driver operating the accelerator pedal, wherein the accelerator pedal (17) is an active accelerator pedal (17) that can be adjusted over a travel distance (s), which, with the formation of a pressure point (A), can be applied with an actuator (25) that can be actuated by a control device (27) with an additional counterforce (F_{G}), which, within a locally restricted pedal travel interval (Δs), increases up to a maximum force (Fₘₐₓ) that can be overridden by the driver, wherein the control device (27) has an evaluation unit (29), **characterised in that,** from a specified limit dwell time (Δt_{G}) of the accelerator pedal (17) operated by the driver within the pedal travel interval (Δs), the evaluation unit (29) generates a deactivation signal (Sₐᵤₛ), with which the counterforce (F_{G}) generated by the actuator (25) can be reduced.

2. Vehicle according to claim 1, **characterised in that** the evaluation unit (29) records an actual dwell time (Δtᵢₛₜ) of the accelerator pedal (17) operated by the driver in its pedal position (s₁) within the pedal travel interval (Δs), and that the evaluation unit (29) compares the recorded actual dwell time (Δtᵢₛₜ) with the limit dwell time (Δt_{G}), and that when the limit dwell time (Δt_{G}) is exceeded, the counterforce (F_{G}) can be reduced.

3. Vehicle according to claim 1 or 2, **characterised in that** when there is a deactivation signal (Sₐᵤₛ), the actuator (25) is deactivated.

4. Vehicle according to claim 1, 2 or 3, **characterised in that** from the specified limit dwell time (Δt_{G}), the evaluation unit (29) recognises that the pedal position (s₁) must be kept within the pedal travel interval (Δs) without overriding the pressure point (A) and deactivates the actuator (25).

5. Vehicle according to any of the preceding claims, **characterised in that,** by providing the pressure point (A), haptic feedback on driving is produced.

6. Vehicle according to claim 5, **characterised in that** the drive unit (1,3) can be operated in a first operating mode (I) and in a second operating mode (II), and that the driver can be notified of a change from the first operating mode (I) to the second operating mode (II) when the pressure point (A) is overridden.

7. Vehicle according to claim 6, **characterised in that** the drive unit has an internal combustion engine (1) and at least one electric motor (3), and that, in the first operating mode (I) drive is provided purely by an electric motor, and in the second operating mode (II) the internal combustion engine (1) is activated or drive is switched to the internal combustion engine (1).

8. Vehicle according to any of the preceding claims, **characterised in that** in the event that the driver should operate the accelerator pedal again during further driving with positive gradients, the actuator is reactivated, in order to promptly provide the counterforce (F_{G}) again.

9. Active accelerator pedal for a vehicle according to any of the preceding claims, in which a control apparatus (15) actuates the drive unit (1,3) at a setpoint torque (Mₛₒₗₗ) that can be specified by the driver operating the accelerator pedal, wherein the accelerator pedal (17) is an active accelerator pedal that can be adjusted over a travel distance (s), which, with the formation of a pressure point (A), can be applied with an actuator (25) that can be actuated by a control device (27) with an additional counterforce (F_{G}), which, within a locally restricted pedal travel interval (Δs), increases up to a maximum force (Fₘₐₓ) that can be overridden by the driver, wherein the control device (27) has an evaluation unit (29), **characterised in that,** from a specified limit dwell time (Δt_{G}) of the accelerator pedal (17) operated by the driver within the pedal travel interval (Δs), the evaluation unit (29) generates a deactivation signal (Sₐᵤₛ), with which the counterforce (F_{G}) generated by the actuator (25) can be reduced.

10. Method for actuating an active accelerator pedal, in which a control apparatus (15) actuates the drive unit (1,3) at a setpoint torque (Mₛₒₗₗ) that can be specified by the driver operating the accelerator pedal, wherein the accelerator pedal (17) is an active accelerator pedal that can be adjusted over a travel distance (s), which, with the formation of a pressure point (A), can be applied with an actuator (25) that can be actuated by a control device (27) with an additional counterforce (F_{G}), which, within a locally restricted pedal travel interval (Δs), increases up to a maximum force (Fₘₐₓ) that can be overridden by the driver, and from a specified dwell time limit (Δt_{G}) of the accelerator pedal (17) operated by the driver within the pedal travel interval (Δs), a deactivation signal (Sₐᵤₛ) is generated, with which the counterforce (F_{G}) generated by the actuator (25) is reduced.

## Revendications

1. Véhicule comportant un groupe propulseur (1, 3) par le biais duquel un moment de propulsion peut être transmis aux roues du véhicule, et comportant un appareil de commande (15) qui commande le groupe propulseur (1, 3) sur un moment théorique (Mₛₒₗₗ) qui peut être prédéfini par le conducteur par l'actionnement de l'accélérateur, dans lequel l'accélérateur (17) est une pédale d'accélération (17) active pouvant être réglée sur un trajet de réglage (s) qui peut être alimentée en formant un point de pression (A) avec un actionneur (25) pouvant être commandé par un dispositif de commande (27) avec une force contraire supplémentaire (F_{G}) qui augmente dans un intervalle de course de pédale (Δs) localement limité jusqu'à une force maximale (Fₘₐₓ) pouvant être forcée par un conducteur, dans lequel le dispositif de commande (27) présente une unité d'évaluation (29), **caractérisé en ce que** l'unité d'évaluation (29) génère à partir d'une durée de maintien limite prédéfinie (Δt_{G}) de la pédale d'accélération (17) actionnée par le conducteur dans l'intervalle de course de pédale (Δs), un signal de désactivation (Sₐᵤₛ) avec lequel la force contraire (F_{G}) générée par l'actionneur (25) peut être réduite.

2. Véhicule selon la revendication 1, **caractérisé en ce que** l'unité d'évaluation (29) saisit une durée de maintien réelle (Δtᵢₛₜ) de la pédale d'accélération (17) actionnée par le conducteur dans sa position de pédale (s₁) dans l'intervalle de course de pédale (Δs), et **en ce que** l'unité d'évaluation (29) compare la durée de maintien réelle (Δtᵢₛₜ) saisie à la durée de maintien limite (Δt_{G}), et **en ce qu'**en cas de dépassement de la durée de maintien limite (Δt_{G}), la force contraire (F_{G}) peut être réduite.

3. Véhicule selon la revendication 1 ou 2, **caractérisé en ce qu'**en présence du signal de désactivation (Sₐᵤₛ), l'actionneur (25) est désactivé.

4. Véhicule selon la revendication 1, 2 ou 3, **caractérisé en ce qu'**à partir de la durée de maintien limite (Δt_{G}) prédéfinie, l'unité d'évaluation (29) reconnaît que la position de la pédale (s₁) doit être conservée dans l'intervalle de course de pédale (Δs) sans un forçage du point de pression (A) et désactive l'actionneur (25).

5. Véhicule selon l'une quelconque des revendications précédentes, **caractérisé en ce que** par la présentation du point de pression (A) s'effectue une rétroaction haptique sur le mode de conduite.

6. Véhicule selon la revendication 5, **caractérisé en ce que** le groupe propulseur (1, 3) peut fonctionner dans un premier mode de fonctionnement (I) et dans un second mode de fonctionnement (II), et **en ce qu'**avec le forçage du point de pression (A), un passage du premier mode de fonctionnement (I) au second mode de fonctionnement (II) peut être signalé au conducteur.

7. Véhicule selon la revendication 6, **caractérisé en ce que** le groupe propulseur présente un moteur à combustion (1) et au moins un moteur électrique (3), et **en ce que** dans le premier mode de fonctionnement (I), une propulsion purement électrique s'effectue, et dans le second mode de fonctionnement (II), le moteur à combustion (1) est mis en service ou le moteur à combustion (1) prend le relais.

8. Véhicule selon l'une quelconque des revendications précédentes, **caractérisé en ce que**, dans le cas où le conducteur actionne à nouveau la pédale d'accélération dans l'autre mode de conduite avec un gradient positif, l'actionneur est à nouveau activé pour réactiver d'un coup la force contraire (F_{G}).

9. Pédale d'accélération active pour un véhicule selon l'une quelconque des revendications précédentes, dans laquelle un appareil de commande (15) commande le groupe propulseur (1, 3) sur un moment théorique (Mₛₒₗₗ) qui peut être prédéfini par le conducteur par un actionnement de l'accélérateur, dans laquelle l'accélérateur (17) est une pédale d'accélération active pouvant être réglée sur un trajet de réglage (s) qui peut être alimentée en formant un point de pression (A) avec un actionneur (25) pouvant être commandé par un dispositif de commande (27) avec une force contraire supplémentaire (F_{G}) qui augmente dans un intervalle de course de pédale (Δs) localement limité jusqu'à une force maximale (Fₘₐₓ) pouvant être forcée par un conducteur, dans laquelle le dispositif de commande (27) présente une unité d'évaluation (29), **caractérisée en ce que** l'unité d'évaluation (29) génère à partir d'une durée de maintien limite prédéfinie (Δt_{G}) de la pédale d'accélération (17) actionnée par le conducteur dans l'intervalle de course de pédale (Δs), un signal de désactivation (Sₐᵤₛ) avec lequel la force contraire (F_{G}) générée par l'actionneur (25) peut être réduite.

10. Procédé de commande d'une pédale d'accélération active, dans lequel un appareil de commande (15) commande le groupe propulseur (1, 3) sur un moment théorique (Msoll) qui peut être prédéfini par le conducteur par un actionnement de l'accélérateur, dans lequel l'accélérateur (17) est une pédale d'accélération active pouvant être réglée sur un trajet de réglage (s) qui est alimentée en formant un point de pression (A) avec un actionneur (25) pouvant être commandé par un dispositif de commande (27) avec une force contraire supplémentaire (FG) qui augmente dans un intervalle de course de pédale (As) localement limité jusqu'à une force maximale (Fmax) pouvant être forcée par un conducteur, et à partir d'une durée de maintien limite prédéfinie (AtG) de la pédale d'accélération (17) actionnée par le conducteur dans l'intervalle de course de pédale (As), un signal de désactivation (Saus) est généré avec lequel la force contraire (FG) générée par l'actionneur (25) est réduite.
